# EUROPEAN PATENT SPECIFICATION

(11) **EP 2 546 636 B1**
(45) Date of publication and mention of the grant of the patent: **10.07.2013**
(21) Application number: 12174593.9
(22) Date of filing: 02.07.2012
(51) Int. Cl.: G01N 21/78

(54) **Method for forming gas sensing layers**
Verfahren zum Formen von Gassensorschichten
Procédé de formation de couches de détection de gaz

(30) Priority: 15.07.2011 LU 91841
(43) Date of publication of application: 16.01.2013
(73) Proprietor: Centre de Recherche Public - Gabriel Lippmann, 4422 Belvaux (LU)
(72) Inventor: Boscher, Nicolas, 57390 Audun le Tiche (FR); Choquet, Patrick, 57050 Longeville les Metz (FR); Duday, David, 2422 Luxembourg (LU)
(74) Representative: Lecomte & Partners

(56) References cited:
- WO-A1-2007/075443
- WO-A2-2010/135413
- US-A1- 2007 140 907

## Description

### Field of the invention

The present invention is directed to a method of providing colorimetric gas sensing layers, wherein gas sensing molecules or particles are embedded in a polymer matrix.

### State of the art

Document WO 2007/075443 A1 discloses a plasma deposited microporous analyte detection layer and a method for producing such a layer. The layer may be obtained by forming a plasma from a gas mixture comprising an organosilane, oxygen and a hydrocarbon. The plasma is deposited on a substrate to form an amorphous random covalent network layer. This amorphous network layer is heated to finally form a microporous amorphous random covalent network layer.

Several of such plasma deposition methods are known in the state of the art using polymer forming precursors injected directly into a plasma discharge and used to deposit different types of films on surfaces.

Document WO 2010/135413 A2 discloses a method of making a sensing element for sensing an analyte, which can be a vapour or gas. Different layers of the sensing element can be deposited on an optically clear substrate using a variety of application methods and by using an organic solvent. A highly analyte-responsive sublayer comprises a polymer of intrinsic microporosity.

However, it has turned out that in case of producing smart optically active surfaces, such methods have the disadvantage that optically active particles, especially gas sensing molecules, are often damaged during the application process or poorly dispersed in the matrix material. The deposited substances might lose their functionality or might even be destroyed making them useless for their purpose, as for instance for gas sensing.

In view of the above discussion, the technical problem is to avoid at least one of the mentioned disadvantages, or in particular, to provide a method for producing smart optically active surfaces, especially gas sensing surfaces, having a high sensing capability.

### Summary of the invention

The above technical problem is solved by the method according to claim 1. In particular, the method for forming a porous colorimetric gas sensing layer according to the present invention comprises the step of providing a mixture of an organic solvent, a polymer forming material and a gas sensing compound or gas sensing particles. In a further step, the mixture is deposited (sprayed or vaporized) on at least a surface portion of a substrate. Thereafter, an atmospheric pressure plasma is applied to the surface portion to form a polymer layer comprising the gas sensing compound or particles. Finally, the steps of depositing the mixture and applying the plasma can be repeated multiple times to form a plurality of stacked or superposed polymer layers comprising the gas sensing compound or particles.

According to the present invention, the crystallinity and/or functionality of the deposited sensitive gas sensing molecules, particles or compounds can be preserved. It is decisive for the present invention that the mixture is first deposited on the surface of the substrate and that an atmospheric pressure plasma is applied thereafter. This procedure protects the very sensitive gas sensing molecules. By spraying the mixture directly on the substrate, rather than spraying it in the discharge, the gas sensing molecules are covered by the polymer formed during the plasma treatment, so that these are protected at an early stage. Furthermore, the present invention allows for obtaining a porous layer which enables gases or volatiles to get into contact with the gas sensing elements. The presence of an organic solvent is allowing dispersing the gas sensing molecules in the layers and favors the formation of porosity while evaporating. Moreover, the use of the atmospheric pressure plasma allows for a simple and fast production of such sensing layers. In particular, no vacuum as used in low pressure techniques, is generated and no high temperatures are used which might lead to a damage or agglomeration of the gas sensing molecules and reduce the pore growth rate of the membrane. In particular, low pressure techniques induce a fast evaporation of both the solvent and the polymer matrix precursor resulting in the loss or severe alteration of gas sensing properties of the gas sensing molecules. Moreover, coatings formed by low pressure techniques are usually denser and restrict the permeation of volatile compounds through the layer, thus decreasing the gas sensing capabilities of the layer.

According to a preferred aspect of the present invention, the gas sensing compound or particles comprise one or more of pyrrole-based macrocycles, tetrapyrrols, porphyrins, metalloporphyrins, phthalocyanines, calixarenes, crystalline coordination polymers and compounds thereof. In particular, these substances or compounds of such substances have proven to result in effective gas sensing layers in combination with the method in accordance with the present invention. Moreover, in accordance with the present invention, the functionality of these particles can be preserved.

In accordance with another preferred aspect of the invention, the polymer forming material is based on organosilicon compounds. In particular, this kind of polymer forming material leads to good porosity, especially in combination with the solvents used in accordance with the present invention.

In accordance with another preferred aspect of the invention, the polymer forming material is selected from the group consisting of hexamethyldisiloxane, octamethylcyclotetrasiloxane, decamethylcyclopentasiloxane, hexaethyldisiloxane, tetraethylorthosilicate, aminopropyltrimethoxysilane, tetramethyldisiloxane, pentamethylcyclopentasiloxane, octamethylcyclooctasiloxane, polydimethylsiloxane and its derivatives. In particular, these materials could be preferably used in order to obtain an effective porous gas sensing layer.

In accordance with another preferred aspect of the invention, the organic solvent is chosen from non-polar solvents, polar aprotic solvents or polar protic solvents. Preferably, the organic solvent is chosen from one or more of ethanol, methanol, isopropanol, chloroform, dichloromethane, tetrahydrofuran, aceton solvents. Even more preferably, the solvent is ethanol or a chlorine based solvent. Using these solvents, results in an improved porosity of the coating, especially in combination with porphyrins or metalloporphyrins.

In accordance with another preferred aspect of the invention, the substrate at least partially consists of one or more of glass, polymers, plastics, composite materials or metals. Preferred metals may be copper, aluminum, iron or steel.

In accordance with another preferred aspect of the invention, the step of applying the atmospheric pressure plasma is carried out, preferably by means of a dielectric barrier discharge plasma, at a temperature of between 5°C and 90°C and preferably of between 15°C and 40°C. In particular, this narrow temperature range is preferred to carry out the method according to the present invention. Lower temperatures might have a negative influence on the layer formation. On the one hand, low substrate temperatures reduce the solvent evaporation rate, possibly leading to solvent retention in the deposited layer. On the other hand, higher temperatures might cause damage to the functionality of required properties of the gas sensing molecules or affect the membrane formation. Fast evaporation of the solvent, occurring for high substrate temperature, is reducing the nucleation and the pore growth rate by the rapid increase of the polymer concentration. In addition, the fast evaporation of the solvent is inducing an agglomeration of porphyrin molecules.

In accordance with another preferred aspect of the invention, the substrate is provided on a moving stage transporting the substrate through a mixture deposition zone to deposit the mixture on at least a portion of the substrate and a (downstream) plasma zone in which the atmospheric pressure plasma is applied. In other words, both zones are (spatially) distinct.

In accordance with yet another preferred aspect of the invention, the oxygen content of the dielectric barrier discharge plasma is lower than 500 ppm, or preferably even below 100 ppm. Most preferably, the oxygen content in the plasma region is even zero. The inventors discovered that low oxygen contents influence positively the gas sensing capability of the formed sensing layer. In particular, oxygen concentrations higher than 500 ppm might result in a degradation of the gas sensing molecules and prevent the formation of effective membranes.

In accordance with still another preferred aspect of the invention, depositing the mixture is performed/controlled by means of an atomizing nozzle. The use of an atomizing nozzle provides for an evenly distributed deposition of the mixture on the substrate's surface which is of advantage for the formation of a layer exhibiting a homogeneous porosity.

In accordance with yet another preferred aspect of the invention, the steps of depositing the mixture and applying the plasma are repeated for at least 10 times. Thus, the achieved coating and its colorimetric gas sensing properties can be easily observed by human eyes. However, it is also possible that further layers without gas sensing particles or compound are added, either on top of the gas sensing layer or between the single coatings of the gas sensing layer. In general, the polymer layers or polymer membranes, especially in the stack form, might not all comprise the gas sensing compounds or particles. As an example, polymer layers containing the gas sensing compounds or particles might be covered by additional polymer layers that could slow down the permeation of an analyte to the gas sensing compounds or particles. Such layers could also prevent direct contact between the gas sensing compounds or particles and food, for example.

According to another aspect of the invention vapors of one or more polymer forming materials are added to the plasma process gas, so that larger layer thicknesses could be obtained. Thus, the gas sensing compound may be better protected from the environment.

Preferably, a moving stage is adapted to move the substrate repeatedly or endlessly through both mentioned zones. Alternatively, the mentioned zones can be repeatedly passed over the substrate. Preferably, repeated sequences of depositing the mixture and applying the plasma are adapted to a production line. According to yet another aspect of the invention, the substrate is exposed to a plasma afterglow region before entering the direct plasma discharge/zone. As explained in more detail below, such an afterglow region provides even more gentle plasma conditions and might prevent degradation of the gas sensing molecules or compound.

All the above mentioned features may be combined and/or substituted with each other.

### Brief description of the drawings

In the following the figures of preferred embodiments are briefly described. Further details are given in the detailed description of the embodiments.
Figure 1 shows a schematic perspective view of an apparatus for carrying out the method according to the present invention; and
Figure 2 shows a spectral shift due to the presence of a gas sensed with a layer in accordance with an example according to the present invention.

### Detailed description of the embodiments

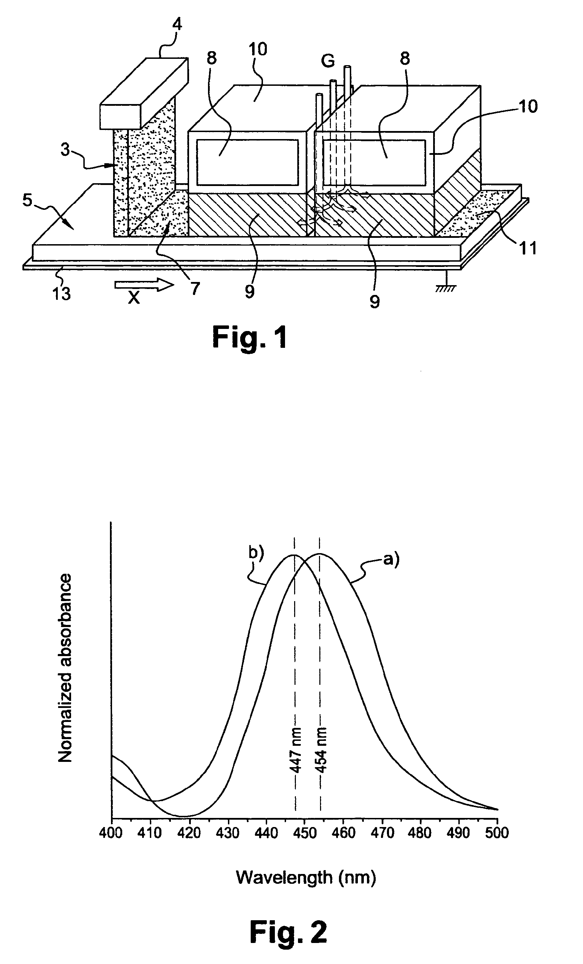

Figure 1 shows a schematic view of an exemplary system for carrying out the invention. According to Figure 1, a mixture 3 of a solvent, gas sensing molecules, compound or particles and a polymer forming material is deposited, sprayed or vaporized via an atomizing nozzle 4 onto a portion 7 of a substrate 5. A stage 13 transports the substrate 5 into the direction x such that the portion 7 of the substrate 5 is moved through a plasma zone 9 in which the coated substrate is exposed to an atmospheric pressure dielectric barrier discharge (AP-DBD) plasma 9. Both zones do not overlap, or are spatially distinct, respectively. The dielectric barrier discharge plasma is provided via a system of two electrodes 8 arranged side by side and having a slot between them through which a gas G may pass to be directed in the direction of the coated substrate 5. Both electrodes 8 are coated with a dielectric layer 10. Being exposed to the dielectric barrier discharge plasma, the polymer forming material forms a polymer layer on the substrate 5. Having passed the plasma zone 9, the substrate 5 comprises a porous layer 11 including the gas sensing compound, molecules or particles. Although not depicted, the above mentioned steps should be carried out several times in order to obtain an effective gas sensing layer. Furthermore, the method is carried out at atmospheric pressure, i.e. at pressures of about 10⁵ Pa.

In particular, it is possible that the moving stage 13 is arranged as a conveyor belt so that the substrate 5 can in principle pass endlessly through the zones of the system. Alternatively, the mentioned zones could be adapted to repeatedly pass over the substrate. A further variant consists in repeating sequences of depositing the mixture and/or applying the plasma to a production line. Moreover, the wording of a plasma zone may encompass the plasma region and also its afterglow region. The afterglow region can be due to a distant plasma source or a pulsed plasma source.

In particular, if using an AP-DBD setup, as for example depicted in Figure 1, an afterglow region is surrounding the plasma discharge (not depicted as such). Hence, the deposited layer would be firstly exposed to the afterglow region, softer than the direct plasma discharge, and is starting the membrane polymerization process already in this region. Thus, the optical and/or chemical properties of the gas sensing molecules or compound can be further prevented from degradation. The (lateral) extension of an afterglow region could be for instance between 1% and 20% of the extension of the plasma zone 9.

Among the wide range of techniques used to grow smart composite films, AP-DBD is a new arising technology. Especially AP-DBD, which may generate low-temperature plasmas, offers the opportunity to work with heat-sensitive particles or substrates. In contrast with the limitations in industrial developments of low-pressure plasmas or sol-gel coatings, AP-DBD can be easily adapted on a coil-to-coil production line. Moreover, it is an environmentally friendly technology, which does not imply the use of solvent nor bath like in the wet methods or electrochemical depositions. However, in principle, other atmospheric pressure plasma techniques could be used, such as atmospheric pressure dielectric barrier discharge torch or DC and low frequency discharges or RF discharges or microwave induced plasmas

The substrate 5 may be any kind of substrate. In particular, it may comprise plastics, glass, or metal surfaces. Preferably, the substrate might be made of steel, copper, or aluminum. However, any material may be used as substrate, without any requirements related to its shape or thickness and dimension, because the discharge plasma apparatus can be adapted to cause coating deposition on a variety of different structures and shapes.

The gas sensing compound or particles may preferably comprise one or more of pyrrole-based macrocycles, tetrapyrrols, porphyrins, metalloporphyrins, phthalocyanines, calixarenes, crystalline coordination polymers and compounds thereof.

Furthermore, organic solvents are necessary to obtain pores in the polymer layer, so that gas molecules to be detected can come into contact with the gas sensing molecules provided in the gas sensing layer.

Preferably, the mixture 3 deposited or sprayed onto the substrate 5 may comprise solvents which are based on ethanol and/or chlorinated or chlorine based solvents. In particular, these compounds allow a good dispersion of the gas sensing compounds in the layers, particularly when applied together with porphyrins or metalloporphyrins, which tend to stick to each other and hide coordination sites. Moreover, they have been identified as resulting in preferable porous layer structures.

The polymer (matrix) forming material, or the precursor respectively, consists preferably of an organosilicon based material or compound. For example, this material could be chosen from the group of hexamethyldisiloxane, octamethylcyclotetrasiloxane, decamethylcyclopentasiloxane, hexaethyldisiloxane, tetraethylorthosilicate, aminopropyltrimethoxysilane, tetramethyldisiloxane, pentamethylcyclopentasiloxane, octamethylcyclooctasiloxane, polydimethylsiloxane and its derivatives.

By depositing the above mentioned mixture 3 on the substrate in a first step and afterwards applying the AP-DBD plasma 9 in a second (subsequent step), the gas sensing substances are protected by the surrounding polymer forming material and are less exposed to the direct plasma influence if compared with methods in which the substances are directly introduced into a plasma discharge. In particular, the deposited layer is firstly exposed to an afterglow region softer than the direct plasma discharge, and is starting the membrane polymerization process therein. Furthermore, atomizing the mixture 3, results in a good spatial distribution of all mixture components forming the basis for a (homogenous) porous structure of the gas sensing layer.

### Example 1

In one specific example according to the invention, a chromium 5,10,15,20-tetraphenylporphyrin (Cr(TPP)(Cl)(H₂O)) molecule to be embedded in the plasma-polymerized layers is first added to a mixture composed of 20 mL of hexamethyldisiloxane and 5 mL of dichloromethane. The prepared suspension is sprayed onto transparent polyethylene foils by an ultrasonic atomizing nozzle operating at 48 kHz and fed by a syringe driver. Polymerization of the deposited liquid layer is carried out with the AP-DBD depicted in Figure 1. The discharge gap between the high voltage electrode and the substrate placed on the grounded electrode is maintained to 1 mm. Plasma is ignited by means of a 1,667 Hz modulated 10 kHz sinusoidal signal of 8 kV and fed by a gas mixture of N₂ and HMDSO. The operating discharge power density is maintained to 0.1 W cm⁻². This example shall serve merely for illustrative purposes and must not be understood as limiting the scope of the present invention.

Figure 2 depicts a UV-visible spectrum of the Cr(TPP)(Cl)(H₂O)/PDMS layer as deposited in accordance with Example 1 and after exposure to triethylamine. The obtained layer shows thus a shift of the absorbance maximum to a lower wave length which can be used as an indicator for the presence of the triethylamine gas. In particular, Figure 2 depicts the normalized absorbance vs. the wavelength. Curve a) shows the absorbance in a triethylamine free atmosphere, whereas curve b) shows the characteristic absorbance of the layer sensing the triethylamine gas. This diagram merely serves for illustrative purposes as well and must not be understood as limiting.

### Example 2

In another specific example according to the invention, a zinc 5,10,15,20-tetraphenylporphyrin (ZnTPP) molecule to be embedded in plasma-polymerized layers is first added to a mixture composed of 20 mL of hexamethyldisiloxane and 5 mL of isopropanol. The prepared suspension is sprayed onto transparent polyethylene foils by an ultrasonic atomizing nozzle operating at 48 kHz and fed by a syringe driver. Polymerization of the deposited liquid layer is carried out with an AP-DBD depicted in Figure 1. The discharge gap between the high voltage electrode and the substrate placed on the grounded electrode is maintained to 1 mm. Plasma is ignited by means of a 1,667 Hz modulated 10 kHz sinusoidal signal of 8 kV and fed by a gas mixture of N₂ and HMDSO. The operating discharge power density is maintained to 0.2 W cm⁻². This example shall serve merely for illustrative purposes and must not be understood as limiting the scope of the present invention.

It is remarked that the features of the above described embodiments may be substituted with each other or combined in any suitable manner. Furthermore, the person skilled in the art may adapt these features in view of specific conditions, setups or applications.

**List of reference signs**

| | |
|---|---|
| 3 | mixture |
| 4 | atomizing nozzle |
| 5 | substrate |
| 7 | substrate portion |
| 8 | electrode |
| 9 | plasma |
| 10 | dielectric coating |
| 11 | polymer layer comprising gas sensing compound/particles |
| 13 | moving stage |
| a) | absorbance of gas sensing layer |
| b) | absorbance of gas sensing layer |
| G | gas flow |
| x | moving direction of the moving stage |

## Claims

1. Method for forming a porous colorimetric gas sensing layer, comprising the following subsequent steps:
a) providing a mixture (3) of:
an organic solvent,
a polymer forming material and
a gas sensing compound or gas sensing particles;
b) depositing the mixture (3) on at least a surface portion (7) of a substrate (5); **characterised in that**
c) an atmospheric pressure plasma (9) is applied to the surface portion (7) to form a polymer layer (11) comprising the gas sensing compound or particles; and preferably
d) repeating steps b) and c) multiple times to form a plurality of stacked polymer layers (11) comprising the gas sensing compound or particles.

2. The method according to claim 1, wherein the gas sensing compound or particles comprise an indicator dye and preferably one or more of pyrrole-based macrocycles, tetrapyrrols, porphyrins, metalloporphyrins, phthalocyanines, calixarenes, crystalline coordination polymers and compounds thereof.

3. The method according to claim 1 or 2, wherein the polymer forming material is based on organosilicon compounds.

4. The method according to one of the preceding claims, wherein the polymer forming material is selected from a group consisting of hexamethyldisiloxane, octamethylcyclotetrasiloxane, decamethylcyclopentasiloxane, hexaethyldisiloxane, tetraethylorthosilicate, aminopropyltrimethoxysilane, tetramethyldisiloxane, pentamethylcyclopentasiloxane, octamethylcyclooctasiloxane, polydimethylsiloxane and its derivatives.

5. The method according to one of the preceding claims, wherein the organic solvent is chosen from non-polar solvents, polar aprotic solvents, or polar protic solvents.

6. The method according to one of the preceding claims, wherein the organic solvent is chosen from one or more of ethanol, methanol, isopropanol, chloroform, dichloromethane, tetrahydrofuran, and aceton solvents.

7. The method according to one of the preceding claims, wherein the step of applying the atmospheric pressure plasma (9) is carried out between a temperature of 5°C and 90°C, and preferably between 15°C and 40°C.

8. The method according to one of the preceding claims, wherein the substrate (5) at least partially consists of glass, plastic, composite materials or metals.

9. The method according to one of the preceding claims, wherein the oxygen content in the plasma process gas is lower than 500 ppm, and preferably lower than 100 ppm.

10. The method according to one of the preceding claims, wherein vapors of one or more polymer forming materials are added to the plasma process gas.

11. The method according to one of the preceding claims, wherein depositing the mixture is controlled by means of an atomizing nozzle (4).

12. The method according to one of the preceding claims, wherein steps and b) and c) are repeated for at least 10 times.

13. The method according to one of the preceding claims, wherein the substrate (5) is provided on a moving stage (13) transporting the substrate (5) through a mixture deposition zone to deposit the mixture (3) on at least a portion (7) of the substrate and a plasma zone in which the atmospheric pressure plasma (9) is applied.

14. The method according to claim 13, wherein the moving stage (13) is adapted to move the substrate (5) repeatedly through the zones.

15. The method according to one of the preceding claims, wherein the substrate (5) is exposed to a plasma afterglow region before entering the direct plasma discharge.

## Patentansprüche

1. Verfahren zur Bildung einer porösen colorimetrischen Gassensorschicht, umfassend die folgenden aufeinanderfolgenden Schritte:
a) Bereitstellen einer Mischung (3) aus:
einem organischen Lösungsmittel,
einem Polymerbildungsmaterial und
einer Gassensorverbindung oder Gassensorteilchen;
b) Auftragen der Mischung (3) auf mindestens einen Oberflächenteil (7) eines
Substrats (5);
**dadurch gekennzeichnet, dass**
c) ein Atmosphärendruck-Plasma (9) auf den Oberflächenteil (7) angewendet wird, um eine Polymerschicht (11) zu bilden, welche die Gassensorverbindung oder-teilchen umfasst; und bevorzugt
d) mehrfach Wiederholen der Schritte b) und c), um eine Vielzahl übereinander angeordneter Polymerschichten (11) zu bilden, welche die Gassensorverbindung oder-teilchen umfassen.

2. Verfahren nach Anspruch 1, wobei die Gassensorverbindung oder -teilchen einen Indikatorfarbstoff und bevorzugt eines oder mehrere von pyrrolbasierten Makrocyclen, Tetrapyrrolen, Porphyrinen, Metalloporphyrinen, Phthalocyaninen, Calixarenen, kristallinen Koordinationspolymeren und Verbindungen davon umfassen.

3. Verfahren nach Anspruch 1 oder 2, wobei das Polymerbildungsmaterial auf Organosiliziumverbindungen basiert ist.

4. Verfahren nach einem der vorgenannten Ansprüche, wobei das Polymerbildungsmaterial aus einer Gruppe ausgewählt ist, bestehend aus Hexamethyldisiloxan, Octamethylcyclotetrasiloxan, Decamethylcyclopentasiloxan, Hexaethyldisiloxan, Tetraethylorthosilicat, Aminopropyltrimethoxysilan, Tetramethyldisiloxan, Pentamethylcyclopentasiloxan, Octamethylcyclooctasiloxan, Polydimethylsiloxan und deren Derivaten.

5. Verfahren nach einem der vorgenannten Ansprüche, wobei das organische Lösungsmittel aus nicht-polaren Lösungsmitteln, polaren aprotischen Lösungsmitteln oder polaren protischen Lösungsmitteln ausgewählt ist.

6. Verfahren nach einem der vorgenannten Ansprüche, wobei das organische Lösungsmittel aus einem oder mehreren von Ethanol, Methanol, Isopropanol, Chloroform, Dichlormethan, Tetrahydrofuran und Acetonlösungsmitteln ausgewählt ist.

7. Verfahren nach einem der vorgenannten Ansprüche, wobei der Schritt des Anwendens des Atmosphärendruck-Plasmas (9) zwischen einer Temperatur von 5°C und 90°C und bevorzugt zwischen 15°C und 40°C ausgeführt wird.

8. Verfahren nach einem der vorgenannten Ansprüche, wobei das Substrat (5) mindestens teilweise aus Glas, Kunststoff, Verbundwerkstoffen oder Metallen besteht.

9. Verfahren nach einem der vorgenannten Ansprüche, wobei der Sauerstoffgehalt in dem Plasmaprozessgas niedriger als 500 ppm und bevorzugt niedriger als 100 ppm ist.

10. Verfahren nach einem der vorgenannten Ansprüche, wobei Dämpfe von einem oder mehreren Polymerbildungsmaterialien dem Plasmaprozessgas zugesetzt werden.

11. Verfahren nach einem der vorgenannten Ansprüche, wobei das Auftragen der Mischung mittels einer Zerstäuberdüse (4) gesteuert wird.

12. Verfahren nach einem der vorgenannten Ansprüche, wobei die Schritte b) und c) mindestens 10 Mal wiederholt werden.

13. Verfahren nach einem der vorgenannten Ansprüche, wobei das Substrat (5) auf einer bewegenden Plattform (13) angebracht ist, die das Substrat (5) durch eine Mischungsauftragszone, um die Mischung (3) auf mindestens einen Teil (7) des Substrats aufzutragen, und eine Plasmazone, worin das Atmosphärendruck-Plasma (9) angewendet wird, transportiert.

14. Verfahren nach Anspruch 13, wobei die bewegende Plattform (13) dazu eingerichtet ist, das Substrat (5) wiederholt durch die Zonen zu bewegen.

15. Verfahren nach einem der vorgenannten Ansprüche, wobei das Substrat (13) einem Plasma-Nachglühbereich ausgesetzt wird, bevor es in die direkte Plasmaentladung eintritt.

## Revendications

1. Procédé pour la production d'une couche colorimétrique poreuse pour la détection d'un gaz, comprenant les étapes successives suivantes consistant à :
a) procurer un mélange (3) :
d'un solvant organique ;
d'une matière formant un polymère ; et
d'un composé de détection d'un gaz ou de particules de détection d'un gaz ;
b) déposer le mélange (3) sur au moins une portion
superficielle (7) d'un substrat (5) ;
**caractérisé en ce que** :
c) on applique un plasma à pression atmosphérique (9) sur la portion superficielle (7) pour obtenir une couche polymère (11) comprenant le composé ou les particules de détection d'un gaz ; et de préférence
d) on répète les étapes b) et c) à plusieurs reprises pour obtenir plusieurs couches polymères empilées (11) comprenant le composé ou les particules de détection d'un gaz.

2. Procédé selon la revendication 1, dans lequel le composé ou les particules de détection d'un gaz comprennent un colorant indicateur et de préférence un ou plusieurs éléments choisis parmi le groupe comprenant des macrocycles à base de pyrrole, des tétrapyrrol e s , des porphyrines, des métalloporphyrines, des phtalocyanines, des calixarènes, des polymères de coordination cristallin, et leurs composés.

3. Procédé selon la revendication 1 ou 2, dans lequel la matière formant un polymère est à base de composés d'organosilicium.

4. Procédé selon l'une quelconque des revendications précédentes, dans lequel la matière formant un polymère est choisie parmi le groupe constitué par l'hexaméthyldisiloxane, l'octaméthylcyclotétrasiloxane, le décaméthylcyclopentasiloxane, l'hexaéthyldisiloxane, l'aminopropyltriméthoxysilane, le tétraméthyldisiloxane, le pentaméthylcyclopentasiloxane, l'octaméthylcyclooctasiloxane, le polydiméthylsiloxane et ses dérivés.

5. Procédé selon l'une quelconque des revendications précédentes, dans lequel le solvant organique est choisi parmi des solvants apolaires, des solvants aprotiques polaires ou des solvants protiques polaires.

6. Procédé selon l'une quelconque des revendications précédentes, dans lequel le solvant organique représente un ou plusieurs éléments choisis parmi le groupe de solvants comprenant l'éthanol, le méthanol, l'isopropanol, le chloroforme, le dichlorométhane, le tétrahydrofuranne et l'acétone.

7. Procédé selon l'une quelconque des revendications précédentes, dans lequel l'étape consistant à appliquer le plasma à pression atmosphérique (9) est mise en oeuvre à une température entre 5 °C et 90 °C, et de préférence entre 15 °C et 40 °C.

8. Procédé selon l'une quelconque des revendications précédentes, dans lequel le substrat (5) est constitué au moins en partie de verre, d'une matière plastique, d'une matière composite ou d'un métal.

9. Procédé selon l'une quelconque des revendications précédentes, dans lequel la teneur du gaz de traitement au plasma en oxygène est inférieure à 500 ppm et de préférence inférieure à 100 ppm.

10. Procédé selon l'une quelconque des revendications précédentes, dans lequel on ajoute au gaz de traitement au plasma des vapeurs d'une ou plusieurs matières formant un polymère.

11. Procédé selon l'une quelconque des revendications précédentes, dans lequel le dépôt du mélange est réglé au moyen d'une buse d'atomisation (4).

12. Procédé selon l'une quelconque des revendications précédentes, dans lequel on répète les étapes b) et c) à concurrence d'au moins 10 fois.

13. Procédé selon l'une quelconque des revendications précédentes, dans lequel on procure le substrat (5) sur un plateau mobile (13) qui transporte le substrat (5) à travers une zone de dépôt de mélange afin de déposer le mélange (3) sur au moins une portion (7) du substrat et à travers une zone de plasma dans laquelle on applique le plasma à pression atmosphérique (9).

14. Procédé selon la revendication 13, dans lequel le plateau mobile (13) est conçu pour déplacer le substrat (5) de manière répétée à travers les zones.

15. Procédé selon l'une quelconque des revendications précédentes, dans lequel le substrat (5) est exposé à une zone de postluminescence de plasma avant de pénétrer dans la décharge plasma directe.
